Europäisches Patentamt

European Patent Office

Office européen des brevets

(11) Numéro de publication: **0 036 596**
A1

(12) **DEMANDE DE BREVET EUROPEEN**

(21) Numéro de dépôt: 81101925.6

(22) Date de dépôt: 16.03.81

(51) Int. Cl.³: **H 04 Q 11/04, H 04 J 3/06,**
**H 04 L 25/36, G 06 F 13/00**

(30) Priorité: 21.03.80 FR 8006353

(43) Date de publication de la demande: 30.09.81
Bulletin 81/39

(84) Etats contractants désignés: **BE CH DE FR GB IT LI NL SE**

(71) Demandeur: **COMPAGNIE INDUSTRIELLE DES TELECOMMUNICATIONS CIT-ALCATEL S.A. dite:,**
**12, rue de la Baume, F-75008 Paris (FR)**

(72) Inventeur: **Thiebaut, Georges, Coat Gourhant Louannec,**
**F-22700 Perros Guirec (FR)**

(74) Mandataire: **Weinmiller, Jürgen et al, Zeppelinstrasse 63,**
**D-8000 München 80 (DE)**

(54) **Dispositif d'imbrication des temps d'écriture et de lecture d'informations dans une mémoire d'un ensemble de synchronisation.**

(57) Le dispositif d'imbrication permet de délivrer, sous commande d'un signal de commande d'écriture (wE) délivré par un compteur local (5), un signal d'écriture en mémoire (wM) dès que le signal délivré par le compteur local prend une première valeur nulle après un signal de lecture (LEC) en mémoire délivré à un circuit d'adressage par le compteur local.

Application aux centraux téléphoniques.

<u>Dispositif d'imbrication des temps d'écriture et de lecture d'infor-</u>
<u>mations dans une mémoire d'un ensemble de synchronisation.</u>

L'invention concerne l'écriture et la lecture d'informations dans une mémoire, les adresses d'écriture et les adresses de lecture n'étant pas délivrées simultanément au circuit d'adressage. Lorsqu'il y a écriture et lecture cycliques, il faut réaliser une imbrication des temps d'écriture et de lecture, ce qui ne pose pas de problème lorsque les informations à écrire et les adresses d'écriture et de lecture sont sous la dépendance d'une base de temps unique. Par contre si les informations à écrire et les adresses d'écriture sont sous la dépendance d'une base de temps et les adresses de lecture sous la dépendance d'une autre base de temps il faut réaliser l'imbrication des temps d'écriture et de lecture. Ce problème se rencontre par exemple dans les centraux téléphoniques qui reçoivent sur un multiplex des informations émises au rythme d'une base de temps distante (horloge distante), le central téléphonique ayant sa base de temps locale (horloge locale). Les bases de temps distante et locale sont des bases de temps plésiochrones c'est-à-dire qu'elles ont des fréquences pratiquement identiques mais néanmoins très légèrement différentes, de sorte qu'il se produit à la longue un décalage entre le début d'une trame distante et le début d'une trame locale ; il s'y ajoute également le phénomène bien connu de la gigue. C'est là le problème de la resynchronisation des informations entrantes. Les bases de temps distante et locale peuvent avoir des fréquences différentes, comme cela est le cas, par exemple, lorsque les informations reçues sont contenues dans une trame de 24 voies, et correspondent à un débit de 1,544 Mbits par seconde, et qu'elles doivent être transmises dans une trame de 32 voies, dont le débit correspond à 2,048 Mbits par seconde.

On connait par le brevet français n° 2 144 112, "Ensemble de synchronisation dans un centre de commutation temporelle", un dispositif de synchronisation ; ce dispositif ne permet la synchronisation des informations avec l'horloge locale que lorsque l'horloge distante et l'horloge locale sont plésiochrones ; ce dispositif ne convient donc pas lorsque les fréquences sont très différentes comme cela est le cas avec des horloges à 1,544 et 2,048 Mbits par seconde. En outre le dispositif connu résoud imparfaitement le problème de la gigue dans le cas ou la gigue est elle même importante.

L'invention a pour but un dispositif d'imbrication des temps d'écriture et de lecture d'informations dans une mémoire, d'un ensemble de synchronisation utilisable pour n'importe quels débits d'informations à l'entrée et à la sortie de la mémoire.

L'invention a pour objet un dispositif d'imbrication des temps d'écriture et de lecture d'informations dans une mémoire d'un ensemble de synchronisation comportant des moyens pour délivrer, sous commande d'un signal de commande d'écriture délivré par un compteur local, un signal d'écriture en mémoire dès que le signal délivré par le compteur local prend une première valeur nulle après un signal de lecture en mémoire délivré par ledit compteur local à un circuit d'adressage de la mémoire, ledit signal d'écriture en mémoire étant également délivré au circuit d'adressage pour autoriser l'adressage en écriture et inhiber l'adressage en lecture de la mémoire.

D'autres caractéristiques et avantages du dispositif de l'invention ressortiront de la description qui va suivre d'un exemple de réalisation illustré par les figures annexées dans lesquelles :

- la figure 1 représente un dispositif de synchronisation de multiplex comportant un dispositif de l'invention,

- la figure 2 représente un chronogramme des signaux utilisés dans le dispositif selon la figure 1 et qui sont :

en 2a un signal d'horloge distante wd

en 2b un multiplex d'entrée ME

en 2c un signal de transfert wdT

en 2d la suite des éléments binaires en sortie d'un compteur/distant

en 2e un signal de remise à zéro du compteur distant.

- la figure 3 est un chronogramme de signaux relatifs au dispositif d'imbrication de l'invention qui sont :

en 3a le signal d'horloge distant wd

en 3b le signal de transfert wdT

en 3c le signal de sortie d'un premier registre unitaire

en 3d le signal d'horloge locale w

en 3e le signal de lecture LEC délivré par un compteur local

en 3f le signal de commande d'écriture wE

en 3g le signal de sortie d'un second registre unitaire

en 3h le signal d'écriture mémoire wM.

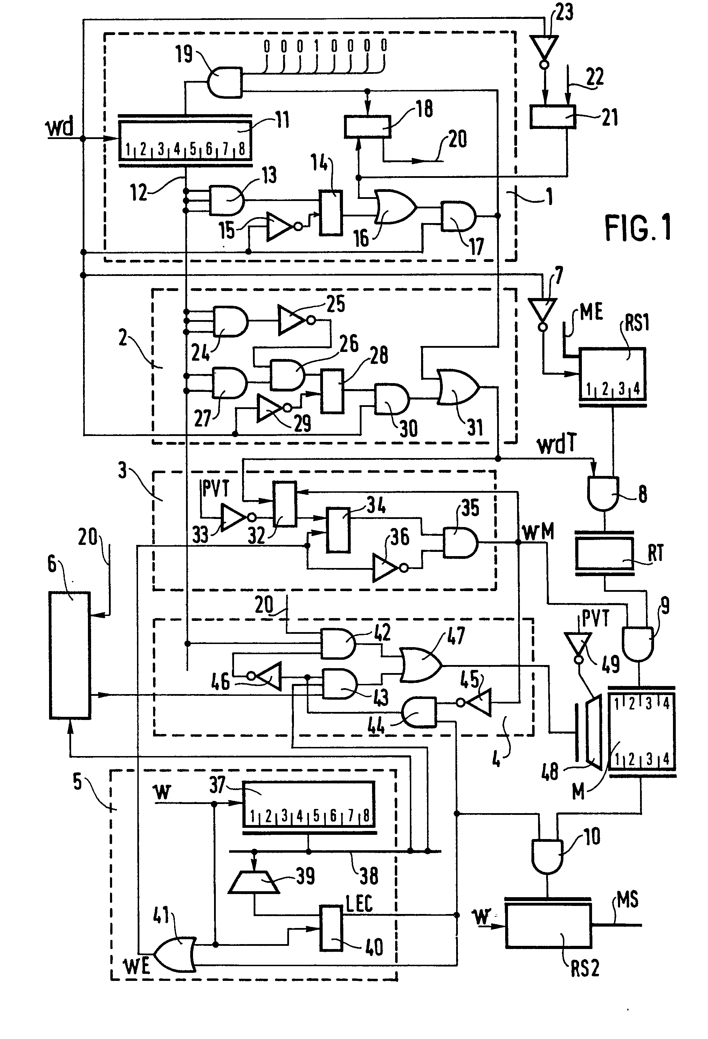

La figure 1 représente un dispositif de synchronisation des voies d'un multiplex dans lequel le dispositif selon l'invention est utilisé.

Dans cette figure, 1 est un compteur distant, 2 un circuit de commande de transfert, 3 un dispositif d'imbrication des temps d'écriture et de lecture, 4 un circuit de commande d'adressage, 5 un compteur local, 6 un circuit de décision, RS1 un registre d'entrée, RT un registre tampon, M une mémoire, RS2 un registre de sortie, ME un multiplex d'entrée et MS un multiplex de sortie.

On supposera à titre d'exemple, que le multiplex d'entrée ME achemine des informations sous forme d'impulsions codées dans des trames de 125 microsecondes ayant 24 voies de 8 eb chacune, chaque trame se terminant par un eb "S" qui constitue le 193ème eb de la trame, selon les normes connues ; le multiplex de sortie MS est un multiplex à 32 voies dans une trame de 125 microsecondes dont seulement 24 voies sont occupées, et on supposera que les voies 0, et 25 à 31 sont inoccupées.

Le registre d'entrée RS1 est un registre série-parallèle à 4 eb relié en entrée au multiplex d'entrée ME et commandé à travers un inverseur 7 par un signal d'horloge distante wd délivré par un convertisseur de code, non représenté, qui reçoit le multiplex distant et délivre le multiplex d'entrée ME à synchroniser. La sortie du registre d'entrée RS1 est reliée par une porte ET 8 au registre tampon RT dont la sortie est reliée par une porte ET 9 à l'entrée de la mémoire M. La sortie de la mémoire M est reliée par une porte ET 10 à l'entrée du registre de sortie RS2 qui est un registre parallèle-série à 4 eb, et la mémoire M a une capacité de 128 mots de 4 eb, c'est-à-dire une capacité correspondant aux voies de deux trames du multiplex sortant MS, soit 64 dans le cas d'un multiplex à 32 voies par trame. Le registre de sortie RS2 est commandé par le signal d'horloge locale w.

Le compteur distant 1 comporte un compteur 11 à 8 eb commandé par le signal d'horloge distante wd ; la sortie du compteur 11 est relié à une liaison 12 à huit fils, soit un fil par eb du compteur 11. Une porte ET 13 a trois entrées reliées respectivement par la liaison 12 aux eb 4, 7 et 8 du compteur 11 ; la sortie de la porte ET 13 est reliée à l'entrée d'un registre unitaire 14 commandé à travers un inverseur 15 par le signal d'horloge distante wd. La sortie du registre unitaire 14 est reliée à une entrée d'une porte OU 16 dont la sortie est reliée à une entrée d'une porte ET 17 recevant sur une autre entrée le signal d'horloge distante wd ; la sortie de la porte ET 17 est reliée d'une part à l'entrée d'un diviseur par deux 18, et d'autre part à l'entrée d'un groupe de portes ET 19 dont chacune correspond à un eb du compteur 11 et reçoit en permanence sur une autre entrée un signal de valeur 0 exceptée la porte ET correspondant à l'eb 4 du compteur 11 qui reçoit un signal de valeur 1 ; de cette manière lorsque la porte ET 17 délivre un signal de valeur 1 le compteur 11 est forcé à la valeur 8 (eb 4 de valeur 1). Là sortie du diviseur par deux 18 est reliée par une liaison 20 au circuit de décision 6 et au circuit de commande d'adressage 4. Une entrée de la porte OU 16 et une entrée de remise à zéro du diviseur par deux 18 sont reliées à la sortie d'un registre unitaire 21, extérieur au compteur distant 1 ; l'entrée du registre unitaire 21 reçoit par une liaison 22 un signal d'initialisation, délivré par un dispositif de recherche du mot de verrouillage trame du multiplex distant ; ce signal d'initialisation est décalé de quatre eb par rapport au début d'une trame du multiplex distant ; le registre unitaire 21 est commandé, à travers un inverseur 23, par le signal d'horloge distante wd.

Le fonctionnement du compteur distant 1 est le suivant : le compteur 11 étant forcé à 8 au départ compte au rythme du signal wd ; lorsqu'il atteint la valeur 200 la porte OU 13 délivre un signal au registre unitaire 14 qui délivre lui même un signal à la porte OU 16 lorsqu'il reçoit le signal $\overline{wd}$ de l'inverseur 15 ; la porte ET 17 reçoit le signal de la porte OU 16 et délivre en sortie un signal lorsqu'elle reçoit le signal wd ; comme indiqué précédemment ce signal de sortie de la porte ET 17 commande la porte ET 19 et le compteur 11 est forcé à 8 ; de cette manière le compteur 11 compte de 8 à 200, et est équivalent à un compteur comptant de 0 à 192 ; le compteur 11 compte donc les 193 eb d'une trame du multiplex distant.

Le diviseur par deux 18 reçoit donc, de la porte ET 17, un signal en fin de chaque trame, et ne délivre un signal de sortie, sur la liaison 20 qu'une trame sur deux. Lorsqu'un signal est reçu par le registre unitaire 21 celui délivre un signal qui remet le diviseur par deux 18 à zéro, et force le compteur 11 à la valeur 8 par l'intermédiaire de la porte OU 16 et de la porte ET 17, ceci quel que soit l'état du compteur 11.

Le circuit de commande de transfert 2 comporte une porte ET 24 à trois entrées reliées respectivement par la liaison 12, aux eb 3, 7, 8, du compteur 11 ; la sortie de la porte ET 24 est reliée par un inverseur 25 à une entrée d'une porte ET 26 ; une porte ET 27, à deux entrées reliées respectivement par la liaison 12, aux eb 1 et 2 du compteur 11, est reliée en sortie à une autre entrée de la porte ET 26 dont la sortie est reliée à l'entrée d'un registre unitaire 28 commandé, à travers un inverseur 29, par le signal wd ; la sortie du registre unitaire 28 est reliée à une entrée d'une porte ET 30 dont une autre entrée reçoit le signal wd ; la sortie de la porte ET 30 est reliée à une entrée d'une porte OU 31 dont une autre entrée est reliée à la sortie de la porte ET 17 du compteur distant 1. La sortie de la porte OU 31 est reliée d'une part au dispositif d'imbrication des écritures et des lectures 3 et d'autre part à une autre entrée de la porte ET 8. Le fonctionnement du circuit de commande de transfert est le suivant : la porte ET 27, reliée aux eb 1 et 2 du compteur 11 délivre, toutes les quatre impulsions du signal wd, un signal qui est pris en compte par la porte ET 26 au signal $\overline{wd}$ et est appliqué au registre unitaire 28 ; le registre unitaire 28 délivre donc un signal qui, par l'intermédiaire de la porte ET 30 et de la porte OU 31 est appliqué à la porte ET 8, ce qui permet de transférer dans le registre tampon RT les quatre eb présents en sortie du registre d'entrée RS1. Lorsque le compteur 11 affiche le nombre 199, la porte ET 24 reliée en entrée aux eb 3, 7 et 8 du compteur délivre un signal qui vient inhiber la porte ET 26 qui reçoit alors un signal de la porte ET 27. Le signal délivré par la porte ET 27, reliée aux eb 1 et 2 ,lorsque le compteur 11 affiche 199, ne correspond pas, par suite du décalage entre le début d'une trame et le départ du compteur forcé à 8 par le signal d'initialisation, aux quatre premiers eb d'une trame, mais aux eb "S", 1, 2, 3 ; il faut donc interdire le transfert de ces quatre eb dans le registre tampon. Par contre le transfert doit avoir lieu dès que les quatre eb du début d'une trame sont présents dans le registre d'entrée RS1 ; ce transfert à lieu lorsque le compteur 11 affiche le nombre 200, la porte ET 17 délivrant alors un signal à la porte OU 31. La porte OU 31 délivre donc un signal de transfert wdT, signal provenant de la porte ET 30, ou de la porte ET 17.

Le dispositif d'imbrication des temps d'écriture et de lecture 3 selon l'invention comporte un premier registre unitaire 32, commandé par le signal de transfert wdT délivré par la porte OU 31, qui reçoit en entrée, à travers un inverseur 33, un signal de perte de verrouillage trame PVT, délivré par un circuit extérieur de surveillance du mot de verrouillage trame ; aussi longtemps qu'il n'y a pas perte du mot de verrouillage trame le premier registre unitaire 32 reçoit donc sur son entrée un signal de valeur "1". La sortie du premier registre unitaire 32 est reliée à l'entrée d'un deuxième registre unitaire 34 commandé par un signal de commande d'écriture wE issu du compteur local 5. La sortie du registre unitaire 34 est reliée à une entrée d'une porte ET 35 dont une autre entrée reçoit, à travers un inverseur 36, le signal de commande d'écriture wE ; la sortie de la porte ET 35 est reliée à une autre entrée de la porte ET 9 et délivre un signal d'écriture mémoire wM, permettant l'écriture, dans la mémoire M, du mot présent dans le registre tampon RT. La sortie de la porte ET 35 est également reliée, d'une part au circuit de commande d'adressage 4, et d'autre part à une entrée de remise à zéro du registre unitaire 32 pour le réinitialiser lorsqu'un signal d'écriture mémoire wM est présent en sortie de la porte ET 35.

Le compteur local 5 comporte un compteur 37, d'une capacité de 8 eb, commandé par un signal d'horloge locale w ; la sortie du compteur 37 est reliée à une liaison 38 ; un décodeur 39 est relié en entrée à la liaison 38 par laquelle il reçoit les eb 1 et 2 du compteur 37, et sa sortie est reliée à l'entrée d'un registre unitaire 40 commandé par le signal d'horloge locale w ; la sortie du registre unitaire 40 est reliée d'une part à une entrée d'une porte OU 41 et d'autre part au circuit de commande d'adressage 4 et à une entrée de la porte ET 10. La porte OU 41 reçoit sur une autre entrée le signal d'horloge locale w et sa sortie est reliée à l'entrée de commande du registre unitaire 34 du dispositif d'imbrication des temps d'écriture et de lecture 3 ; le signal de commande d'écriture wE est donc délivré par la porte OU 41.

Le fonctionnement du compteur local est le suivant : le compteur 37 compte au rythme du signal d'horloge locale w et le décodeur 39, qui reçoit les eb 1 et 2 du compteur 37, délivre un signal quand les eb 1 et 2 ont la valeur "1" ; le signal de sortie est pris en compte par le registre unitaire 40 sous commande du signal d'horloge locale w et présent en sortie pendant une période du signal w. Le signal en sortie du registre unitaire 40 est un signal de lecture LEC ; le signal de commande d'écriture wE en sortie de la porte OU 41 résulte de la combinaison du signal d'horloge locale w et du signal de lecture LEC.

Le circuit de commande d'adressage 4 comporte une porte ET 42 reliée en entrée d'une part à la liaison 12 de laquelle elle reçoit les eb 3 à 8 du compteur 11 et d'autre part à la liaison 20 de laquelle elle reçoit un eb 9 du diviseur par deux 18 ; une porte ET 43 est reliée en entrée d'une part à la liaison 38 de laquelle elle reçoit les eb 3 à 8 du compteur 37, et d'autre part à une sortie du circuit de décision 6 duquel elle reçoit un eb 9. Une porte ET 44 a une entrée reliée à la sortie du registre unitaire 40 et une autre entrée reliée, par un inverseur 45, à la sortie de la porte ET 35. La sortie de la porte ET 44 est reliée d'une part directement à une autre entrée de la porte ET 43, et d'autre part, à travers un inverseur 46 à une autre entrée de la porte ET 42. Une porte OU 47 a une entrée reliée à la sortie de la porte ET 42 et une autre entrée reliée à la sortie de la porte ET 43 ; la sortie de la porte OU 47 est reliée au circuit d'adressage 48 de la mémoire M. Une entrée de commande du circuit d'adressage 48 reçoit, à travers un inverseur 49, le signal de perte de verrouillage trame PVT, ce qui permet d'inhiber l'adressage de la mémoire M lorsque le circuit chargé de la surveillance du mot de verrouillage trame émet le signal PVT.

Le circuit de décision 6 est un circuit de type connu, qui autorise les sauts ou les doublements d'une trame de la mémoire M, à la lecture, puisque les horloges locales et distances ont des fréquences différentes ; ceci est encore vrai dans le cas ou les multiplex ont même trame et même nombre de voies dans une trame. Le circuit de décision est relié en entrée à la liaison 38 de laquelle il reçoit les eb 4 à 8 du compteur 37, à la liaison 20 de laquelle il reçoit un eb 9 correspondant à un eb de poids fort 9 pour le compteur 11.

Le circuit de commande d'adressage 4 délivre donc les adresses d'écriture et de lecture à la mémoire M sous commande du dispositif d'imbrication des temps d'écriture et de lecture 3 qui, lorsqu'il délivre un signal d'écriture mémoire wM, inhibe la porte ET 44, donc la porte ET 43 qui délivre les adresses de lecture ; la porte ET 44 étant inhibée, la porte ET 42 est activée et délivre une adresse d'écriture.

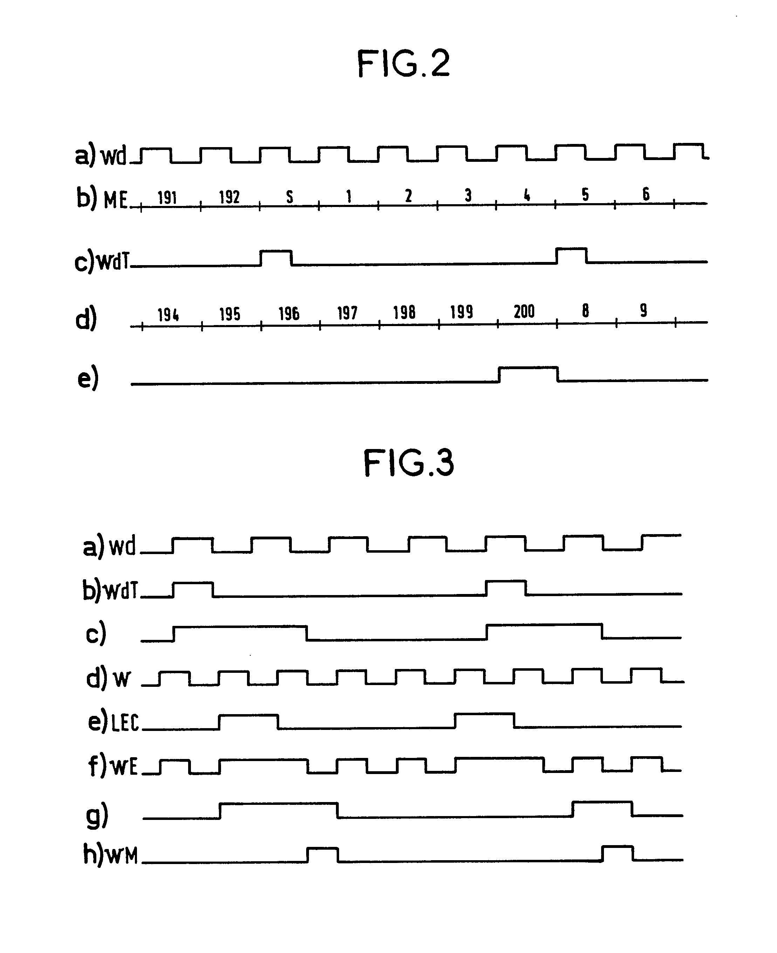

La figure 2 représente des signaux qui sont :

2 - a le signal d'horloge distante wd, qui, dans le cas d'une trame à 24 voies est un signal de 323,5 nanosecondes de durée et de période 647 nanosecondes.

2 - b le multiplex entrant ME, avec ses éléments binaires et l'élément binaire supplémentaire "S" en fin de trame,

2 - c le signal de transfert wdT,

2 - d la suite des éléments binaires en sortie du compteur 11 du compteur distant 1,

2 - e le signal de remise à la valeur 8 du compteur 11, délivré par la porte OU 16, via la porte ET 17, lorsque le multiplex entrant est synchronisé ; ce signal apparaît lorsque le compteur le nombre 200, comme cela a été dit ; dans le cas d'une perte de verrouillage trame, il apparaît sur la liaison 22 un signal d'initialisation qui est transmis par la porte ET 17, et qui est décalé de quatre eb par rapport à une trame du multiplex entrant ME ; dans ce cas, à la figure 2d, les eb du compteur sont quelconques.

La figure 3 est un chronogramme de signaux concernant le dispositif d'imbrication des temps d'écriture et de lecture ; ces signaux sont :

3 - a le signal d'horloge distante wd,

3 - b le signal de transfert wdT,

3 - c le signal de sortie du registre unitaire 32,

3 - d le signal d'horloge locale w, qui dans le cas d'une trame à 32 voies est un signal de 244 nanosecondes de durée et de période 488 nanosecondes,

3 - e le signal de lecture LEC,

3 - f le signal de commande d'écriture wE,

3 - g le signal de sortie du registre unitaire 34,

3 - h le signal d'écriture mémoire wM.

Le signal de transfert wdT, figure 3b, est élaboré par le circuit de commande de transfert 2 toutes les quatre périodes du signal d'horloge distante wd, excepté en début de trame ou il est séparé de l'impulsion précédente par cinq périodes du signal d'horloge distante pour tenir compte de l'eb supplémentaires "S" comme celà est représenté figure 2 - c. Le signal de lecture LEC, figure 3 - e dure une période du signal d'horloge locale w et est élaboré toutes les quatre périodes du signal w. Le registre unitaire 32 est activé par le signal wdT comme représenté figure 3 -c . Chaque possibilité d'écriture, signal d'écriture wE figure 3 -f, vient tester le contenu du registre unitaire 32 appliqué au registre unitaire 34 ; lorsque la sortie du registre unitaire 32 a la valeur 1 le registre unitaire 34 affiche la valeur 1, comme représenté figure 3 - g. Le signal d'écriture mémoire wM, figure 3 - h, est délivré dès que le signal d'écriture wE prend la valeur zéro, ce qui remet le registre unitaire 32 à zéro. Le registre unitaire 34 prend alors la valeur zéro dès que le signal d'écriture wE prend la valeur 1.

Bien entendu, s'il y a perte du mot de verrouillage de trame, le registre unitaire 32 ne prend pas en compte les signaux de transfert wdT délivrés par la porte OU 31, et il n'y a donc pas transfert de mot du registre tampon RT dans la mémoire M.

La lecture s'effectue cycliquement toutes les quatre périodes de l'horloge locale w, et la durée d'adressage correspondante est d'une période de l'horloge locale, signal LEC figure 3 - e. On dispose donc de trois périodes de l'horloge locale pour l'écriture en mémoire M. Le dispositif d'imbrication décrit ci-dessus donne trois possibilités d'écriture entre deux lectures, qui correspondent aux temps ou le signal d'écriture wE est nul (figure 3 - f), ce qui active la porte OU 35 ; l'écriture est réalisée par celle de ces possibilités qui se situe immédiatement après chaque chargement du registre tampon RT chargement qui est commandé par le signal de transfert wdT figure 3 - b.

Le dispositif d'imbrication des temps d'écriture et de lecture d'une mémoire a été décrit en prenant, uniquement à titre d'exemple, une fréquence d'horloge distante plus basse que la fréquence d'horloge locale, mais le dispositif de l'invention s'applique bien entendu au cas où la fréquence de l'horloge distante est plus grande que celle de l'horloge locale, les compteurs distant 1 et local 5 ayant une capacité de comptage liée aux multiplex d'entrée ME et de sortie MS, respectivement. Dans tous les cas les doublements ou sauts de trame sont imposés par le circuit de décision 6, comme cela est également le cas lorsque les fréquences des horloges distante et locale sont plésiochrones. On a également supposé dans la description, qu'il s'agissait de synchroniser un multiplex d'entrée ayant son horloge propre, sur une horloge locale de fréquence différente, ce qui amène à relier l'entrée du registre unitaire 32 à la sortie d'un inverseur 33 qui reçoit un signal de perte de verrouillage trame ; ceci revient, lorsqu'il n'y a pas perte de verrouillage trame, à appliquer un signal permanent de valeur 1 sur l'entrée du registre unitaire 32 ; si par conséquent le dispositif de l'invention est utilisé pour un changement de rythme d'informations acheminées par une ligne d'entrée et non plus par un multiplex, l'entrée du registre unitaire 32 peut recevoir directement un signal permanent de valeur 1, puisque dans ce cas il n'y a pas de mot de verrouillage trame.

REVENDICATIONS

1/ Dispositif d'imbrication des temps d'écriture et de lecture d'informations dans une mémoire d'un ensemble de synchronisation comportant un registre d'entrée (RS1) relié à une ligne (ME) d'entrée des informations, un registre tampon (RT) relié en entrée par une première porte ET (8) au registre d'entrée et relié en sortie par une deuxième porte ET (9) à une mémoire (M), un registre de sortie (RS2) relié à une ligne (MS) de sortie des informations, un compteur distant (1) commandé par un signal (wd) d'horloge distante, les informations sur la ligne d'entrée étant sous la dépendance de ladite horloge distante, un compteur local (5) commandé par un signal (w) d'horloge locale, les informations sur la ligne de sortie étant sous la dépendance de l'horloge locale, un circuit de commande de transfert (2) pour le transfert des informations du registre d'entrée dans le registre tampon, la sortie dudit circuit de transfert étant reliée à une entrée de la deuxième porte ET, et un circuit de commande d'adressage (4) de la mémoire, caractérisé par le fait qu'il est relié en entrée d'une part à la sortie du circuit de commande de transfert (2) duquel il reçoit un signal de transfert (wdT) égal à une période du signal (wd) d'horloge distante, toutes les quatre périodes de ce signal d'horloge distante, et d'autre part à la sortie du compteur local (5) duquel il reçoit un signal de commande d'écriture (wE) résultant de la combinaison du signal d'horloge locale (w) et d'un signal de lecture (LEC) égal à une période du signal d'horloge locale toutes les quatre périodes de signal d'horloge locale, qu'il est relié en sortie au circuit de commande d'adressage (4) pour autoriser l'adressage en écriture de la mémoire (M) et inhiber l'adressage en lecture, et qu'il comporte des moyens pour délivrer un signal d'écriture en mémoire (wM) lorsque ledit signal de commande d'écriture (wE) prend une première valeur nulle après le signal de lecture (LEC) qui est également délivré au circuit de commande d'adressage (4) pour autoriser l'adressage en lecture de la mémoire (M).

2/ Dispositif selon la revendication 1, caractérisé par le fait que les moyens pour délivrer un signal d'écriture en mémoire (wM) comprennent un premier (32) et un second (34) registres unitaires, une porte ET (35) et un inverseur (36), le premier registre unitaire (32) recevant sur une entrée un signal de valeur 1 et ayant une entrée de commande reliée à la sortie du circuit de commande de transfert (2) et étant relié en sortie à une entrée du second registre unitaire (34) commandé par le signal de commande d'écriture (wE) délivré par le compteur local (5), le second registre unitaire étant relié en sortie à une entrée de la porte ET (35), l'inverseur (36) recevant en entrée le signal de commande d'écriture (wE) et étant relié en sortie à une autre entrée de la porte ET (35) dont la sortie délivre le signal d'écriture en mémoire (wM), la sortie de la porte ET (35) étant en outre reliée à une entrée de remise à zéro du premier registre unitaire (32).

3/ Dispositif selon la revendication 2, caractérisé par le fait que les lignes d'entrée et de sortie des informations sont des multiplex (ME, MS) ayant même durée de trame, mais ayant un nombre de voies par trame différent, et que le signal de valeur 1 commandant le premier registre unitaire (32) est délivré par un inverseur (33) recevant en entrée un signal de perte de verrouillage trame (PVT) indiquant la perte de synchronisation entre les multiplex d'entrée et de sortie.

FIG.1

# FIG.2

a) wd

b) ME  191  192  S  1  2  3  4  5  6

c) wdT

d)  194  195  196  197  198  199  200  8  9

e)

# FIG.3

a) wd

b) wdT

c)

d) w

e) LEC

f) wE

g)

h) wM

Office européen
des brevets

**RAPPORT DE RECHERCHE EUROPEENNE**

0036596

Numéro de la demande

EP 81 10 1925

## DOCUMENTS CONSIDERES COMME PERTINENTS

| Catégorie | Citation du document avec indication, en cas de besoin, des parties pertinentes | Revendication concernée |
|---|---|---|
| | FR - A - 2 363 947 (ROCHE)<br><br>* page 2, lignes 5 à 7; page 10, lignes 29 à 71; page 12, ligne 27; page 22, ligne 39 à page 23, ligne 10 *<br><br>-- | 1,3 |
| | FR - A - 2 256 606 (ROCHE)<br><br>* page 5, ligne 11 à page 6, ligne 19; page 9, lignes 5 à 15 *<br><br>-- | 1 |
| | COMMUTATION ET ELECTRONIQUE, no. 34, juillet 1971 ISSY-LES-MOULINEAUX D. FEUERSTEIN et al.: "Groupes d'équipements de synchronisation ou système de commutation temporelle Platon", pages 7-24.<br><br>* page 19, paragraphe VIII-2 et figure 15 *<br><br>-- | 1,2 |
| | US - A - 4 056 851 (HOVAGIMYAN)<br><br>* colonne 2, ligne 4 à colonne 3, ligne 21 *<br><br>-- | 1 |
| | US - A - 3 809 820 (SULLIVAN)<br><br>* colonne 1, lignes 22 à 38; colonne 3, ligne 38 à colonne 5, ligne 27 *<br><br>--<br><br>./.. | 1,2,3 |

**CLASSEMENT DE LA DEMANDE (Int. Cl.³)**

H 04 Q 11/04
H 04 J 3/06
H 04 L 25/36
G 06 F 13/00

**DOMAINES TECHNIQUES RECHERCHES (Int. Cl.³)**

H 04 Q 11/04
H 04 J 3/06
H 04 J 3/07
H 04 L 25/36

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 24.06.1981 | LAMADIE |

OEB Form 1503.1 06.78

| Catégorie | Citation du document avec indication, en cas de besoin, des parties pertinentes | Revendication concernée |
|---|---|---|
| | US - A - 4 158 107 (NICHOLAS) <br> * colonne 2, ligne 63 à colonne 3, ligne 30; colonne 7, lignes 13 à 19 * | 1 |

**DOCUMENTS CONSIDERES COMME PERTINENTS**

**CLASSEMENT DE LA DEMANDE (Int. Cl. 3)**

**DOMAINES TECHNIQUES RECHERCHES (Int. Cl. 3)**